Europäisches Patentamt

European Patent Office

Office européen des brevets

(19)

(11) Numéro de publication : **0 191 266
B1**

(12)

# FASCICULE DE BREVET EUROPÉEN

(45) Date de publication du fascicule du brevet :
07.09.88

(51) Int. Cl.⁴ : **B 29 C 59/02**

(21) Numéro de dépôt : **85810057.1**

(22) Date de dépôt : **14.02.85**

(54) Dispositif pour l'impression en relief à sec.

(43) Date de publication de la demande :
**20.08.86 Bulletin 86/34**

(45) Mention de la délivrance du brevet :
**07.09.88 Bulletin 88/36**

(84) Etats contractants désignés :
**AT BE DE FR GB IT LU NL SE**

(56) Documents cités :
**FR-A- 2 373 402
FR-A- 2 475 461
GB-A- 327 222
GB-A- 2 127 750
US-A- 2 925 625**

(73) Titulaire : **RADULA AG
Scuol (Gr.) (CH)**

(72) Inventeur : **RADULA AG
Scuol (Gr.) (CH)**

(74) Mandataire : **Ardin, Pierre et al
PIERRE ARDIN & CIE 22, rue du Mont-Blanc Case
postale 60
CH-1211 Genève 1 (CH)**

## Description

On connait des dispositifs pour l'impression en relief à sec pour substances en feuilles ou plaques susceptibles d'être déformées plastiquement par pression, comportant un poinçon en matière thermoplastique présentant un relief négatif obtenu par moulage à partir d'une matrice en matière thermodurcissante, elle-même produite à partir d'une gravure. Dans ces dispositifs, la mise en service est longue et compliquée, car l'emplacement exact du poinçon sur la presse est difficile à obtenir, surtout si le relief est destiné à se superposer à une image imprimée. Dans le cas des installations classiques, il est d'autre part nécessaire de réaliser, pour chaque cycle d'impression, un contre-moule au moyen de papier buvard ou de pâtes spéciales. Les reliefs obtenus avec de tels moules manquent de netteté et les moules de ce type ne peuvent être utilisés qu'avec des presses du type « plan contre plan ».

Le dispositif selon la présente invention a pour but de remédier à ces défauts.

A cet effet le dispositif est caractérisé en ce que le poinçon coopère avec un contre-poinçon présentant sur sa face en regard du poinçon une empreinte positive dudit relief, au moins l'un des deux étant constitué en une matière transparente et au moins l'un des deux comportant sur la face opposée au relief une butée de poussée dont le contour est sensiblement le même que celui du relief.

Le dessin annexé représente, schématiquement et à titre d'exemple, une forme d'exécution et des variantes du dispositif pour l'impression en relief à sec selon la présente invention.

La figure 1 est une vue en perspective avec coupe d'un poinçon

La figure 2 est une vue en perspective avec coupe du contre-poinçon correspondant.

La figure 3 est une vue en perspective d'une variante d'exécution du poinçon.

La figure 4 est une vue en élévation d'une autre variante d'exécution du poinçon.

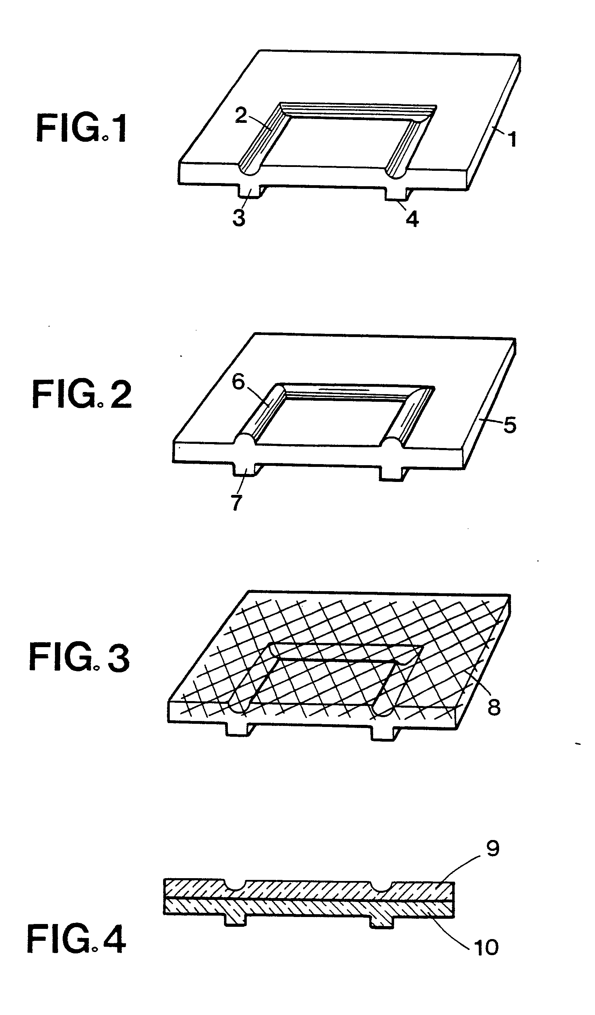

En référence à la fig. 1, le poinçon 1 comporte sur une face une empreinte 2 correspondant, en creux, à la forme du relief que l'on désire reproduire. Sur sa face opposée le poinçon 1 porte une butée de poussée 3 qui se présente sous forme d'une légère surélévation à surface plane et possédant un contour 4 sensiblement identique à celui du relief à reproduire. Le poinçon et la butée de poussée sont constitués en matière transparente thermoplastique.

Le contre-poinçon 5, illustré à la fig. 2, porte sur une de ses faces le relief à reproduire 6 et sur sa face dorsale une butée de poussée 7 similaire à celle décrite ci-dessus.

Les butées de poussée moulées sur la partie dorsale du contre-poinçon, respectivement du poinçon, permettent de réduire considérablement la pression exercée par la presse, puisque la pression est uniquement exercée sur les parties destinées à être reproduites en relief. Cette pression sélective, transmise par les butées, permet également d'atteindre une plus grande netteté du relief et d'éviter des marques inesthétiques provenant des bords du poinçon ou du contre-poinçon. Le fait de travailler avec des pressions plus faibles permet de réduire considérablement l'usure de la presse.

Comme le poinçon est moulé dans une matière transparente, le repérage et le réglage précis de sa position sont largement facilités, ceci d'autant plus que le relief à reproduire se superpose très souvent à une image déjà imprimée. Il en résulte un gain considérable du temps de réglage.

La flexibilité de la matière thermoplastique utilisée permet l'emploi de machines d'imprimerie du type « plan — contre — cylindre » ou de presses rotatives, ce qui est impossible avec les dispositifs connus.

Le procédé pour obtenir les poinçons et les contre-poinçons est le suivant :

A partir de l'esquisse de l'image à réaliser en relief, on procède à une gravure en négatif par les moyens connus tels que attaque à l'acide, gravure manuelle ou mécanique. De la même esquisse, on effectue également une gravure en positif. La gravure en négatif permettra d'obtenir, par moulage dans une matière plastique thermodurcissante, une matrice en positif du relief, d'où on tire une deuxième matrice du relief en négatif. La seconde gravure donnera, par moulage en plastique thermodurcissant, la matrice de la butée de poussée du contre-poinçon et, si l'image est symétrique, également celle du poinçon. Dans le cas, où l'image ne présente pas cette propriété de symétrie, on effectuera une troisième gravure en positif de l'image symétrique renversée pour obtenir, à partir de cette gravure par moulage, une matrice en plastique thermodurcissant de la butée du poinçon. La matrice du relief en positif et la matrice de la butée de poussée correspondante permettent de mouler le nombre désiré de copies du poinçon en matière thermoplastique transparente. De façon analogue, on produira un nombre identique ou, si nécessaire, supérieur de contre-poinçon à partir de la matrice du relief en négatif et de la matrice de butée correspondante.

Selon une variante d'exécution illustrée à la fig. 3, on noie lors du moulage, un treillis 8 en matière ferromagnétique dans la matière thermoplastique transparente du poinçon. Ce treillis permet de fixer le poinçon par des moyens électromagnétiques connus sur la table de la presse d'imprimerie. Il en résulte d'une part un positionnement et un déblocage très rapide des poinçons et d'autre part une économie de ruban adhésif double-face.

Une autre variante d'exécution (fig. 4) est conçue de telle manière que le poinçon comporte deux couches 9,10. L'une 9, moulée dans une matière thermoplastique rigide, porte l'empreinte du relief à reproduire et l'autre 10, constituée par une matière thermoplastique souple, forme le dos du poinçon et confère à ce dernier ses propriétés de flexibilité nécessaire.

## Revendications

1. Dispositif pour l'impression en relief à sec pour substances en feuilles ou plaques susceptibles d'être déformées plastiquement par pression, comportant un poinçon en matière thermoplastique, présentant un relief négatif obtenu par moulage à partir d'une matrice en matière thermodurcissante, elle-même produite à partir d'une gravure, caractérisée en ce que le poinçon coopère avec un contre-poinçon présentant sur sa face en regard du poinçon une empreinte positive dudit relief, au moins l'un des deux étant constitué en une matière transparente et au moins l'un des deux comportant sur la face opposée au relief une butée de poussée dont le contour est sensiblement le même que celui du relief.

2. Dispositif selon la revendication 1, caractérisée en ce que le poinçon est constitué en une matière thermoplastique transparente, cette dernière renfermant au moins une partie ferromagnétique permettant de fixer le poinçon par des moyens magnétiques sur un support.

3. Dispositif selon la revendication 1, caractérisée en ce que le poinçon est constitué par deux couches, l'une portant le relief, en une matière transparente rigide, l'autre, formant le dos du poinçon, en une matière transparente flexible.

## Claims

1. Embossing device for sheet or plate materials capable of being plastically deformed by pressure, comprising a punch of thermoplastic material having a negative relievo obtained by casting from a mould of thermosetting material, the latter having itself been made from an engraving, characterized in that the punch cooperates with a counter-punch whose side facing the punch has a positive impression of said relievo, at least one of the two being of a transparent material and at least of the two carrying, on its face opposite the relievo, a push abutment whose contour is substantially the same as that of the relievo.

2. Device according to claim 1, characterized in that the punch is made of transparent thermoplastic material, the latter containing at least a ferromagnetic part enabling the punch to be fixed on a support by magnetic means.

3. Device according to claim 1, characterized in that the punch is formed of two layers, one carrying the relievo, in a rigid transparent material, the other, forming the back of the punch, in a flexible transparent material.

## Patentansprüche

1. Vorrichtung zur tockenen Reliefprägung für Materialien in Blatt- oder Plattenform, welche durch Druck plastisch verformbar sind, mit einem Prägestempel aus thermoplastischem Material, der ein negatives Relief aufweist, welches durch Formen ausgehend von einer Matrize aus bei Wärme aushärtendem Material erzeugt wird, wobei die Matrize selbst von einer Gravur ausgehend hergestellt wird, dadurch gekennzeichnet, daß der Prägestempel mit einem Gegenstempel zusammenwirkt, der auf seiner dem Prägestempel zugewendeten Fläche einen positiven Abdruck des Reliefs aufweist, wobei mindestens einer der beiden aus durchsichtigem Material hergestellt ist und mindestens einer der beiden auf der von dem Relief abgewendeten Fläche ein Druck-Gegenlager umfaßt, dessen Form im wesentlichen der des Reliefs gleich ist.

2. Vorrichtung nach Anspruch 1, dadurch gekennzeichnet, daß der Prägestempel aus einem thermoplastischen durchsichtigen Material hergestellt ist, wobei letzteres mindestens einen ferromagnetischen Teil beinhaltet, der die Befestigung des Prägestempels durch magnetische Mittel auf einem Träger ermöglicht.

3. Vorrichtung nach Anspruch 1, dadurch gekennzeichnet, daß der Prägestempel aus zwei Schichten gebildet wird, wobei die eine das Relief tragende aus einem starren durchsichtigen Material besteht und die andere die Rückseite des Prägestempels bildende aus einem flexiblen durchsichtigen Material besteht.

**FIG.1**

**FIG.2**

**FIG.3**

**FIG.4**